# EUROPEAN PATENT SPECIFICATION

(11) **EP 1 811 459 B1**
(45) Date of publication and mention of the grant of the patent: **27.11.2019**
(21) Application number: 06381005.5
(22) Date of filing: 18.01.2006
(51) Int. Cl.: G06T 17/00

(54) **An identification device containing the tridimensional form description of a real world's object and a proceeding related to the use of this identification device**
Ein Identifizierungs-apparat der die dreidimensionale Form eines realen Gegenstandes beschreibt und eine Methode zur Benutzung diesen Aapparates
Un appareil d'identification qui contient la description tridimensionelle d'un objet physique et la méthode pour l'utilisation de cet appareil d'identification

(43) Date of publication of application: 25.07.2007
(73) Proprietor: Thomson Licensing, 92130 Issy-les-Moulineaux (FR)
(72) Inventor: De Espona Delgado, Jose Maria, 28004 Madrid (ES)
(74) Representative: Vidon Brevets & Stratégie

(56) References cited:
- EP-A1- 1 811 459
- WO-A-2005/107274
- US-A1- 2005 148 828
- K. KJAERSIDE ET AL.: "ARDressCode: augmented dressing room with Tag-based Motion Tracking and Real-Time Clothes simulation" CENTRAL EUROPEAN MULTIMEDIA AND VIRTUAL REALITY CONFERENCE, 2005, pages 43-48, XP002395984
- BOUKRAA M ET AL: "Tag-based vision: assisting 3d scene analysis with radio-frequency tags" INFORMATION FUSION, 2002. PROCEEDINGS OF THE FIFTH INTERNATIONAL CONFERENCE ON JULY 8-11, 2002, PISCATAWAY, NJ, USA,IEEE, vol. 1, 8 July 2002 (2002-07-08), pages 412-418, XP010595150 ISBN: 0-9721844-1-4
- MAE Y ET AL: "Object recognition using appearance models accumulated into environment" PATTERN RECOGNITION, 2000. PROCEEDINGS. 15TH INTERNATIONAL CONFERENCE ON SEPTEMBER 3-7, 2000, LOS ALAMITOS, CA, USA,IEEE COMPUT. SOC, US, vol. 4, 3 September 2000 (2000-09-03), pages 845-848, XP010533210 ISBN: 0-7695-0750-6
- H. HONTANI: "a visual tracking system using RFID tag" PROCEEDINGS OF SPIE-IS&T ELECTRONIC IMAGING, INTERNET IMAGING VI, EDITED BY SIMONE SANTINI, RAIMONDO SCHETTINI AND THEO GEVERS, vol. 5670, 2005, pages 165-174, XP002395994

## Description

In this description, the identification device containing the tridimensional form of a real world's object will be referred as a "3DFORM-ID DEVICE". The use of radio frequency tags in conjunction with three-dimensional models is known from Boukraa and Ando, 2002, "Tag-based vision assisting 3D scene analysis with radio frequency tags", Information Fusion, vol 1, pages 412-418, and Kjaerside et al, 2005, "ARDressCode: Augmented Dressing Room with Tag-based Motion Tracking and Real-time Clothes Simulation", Central European Multimedia and Virtual Reality Conference.

### 3.1 COMPONENTS CONTAINED IN A BASIC 3DFORM-ID DEVICE

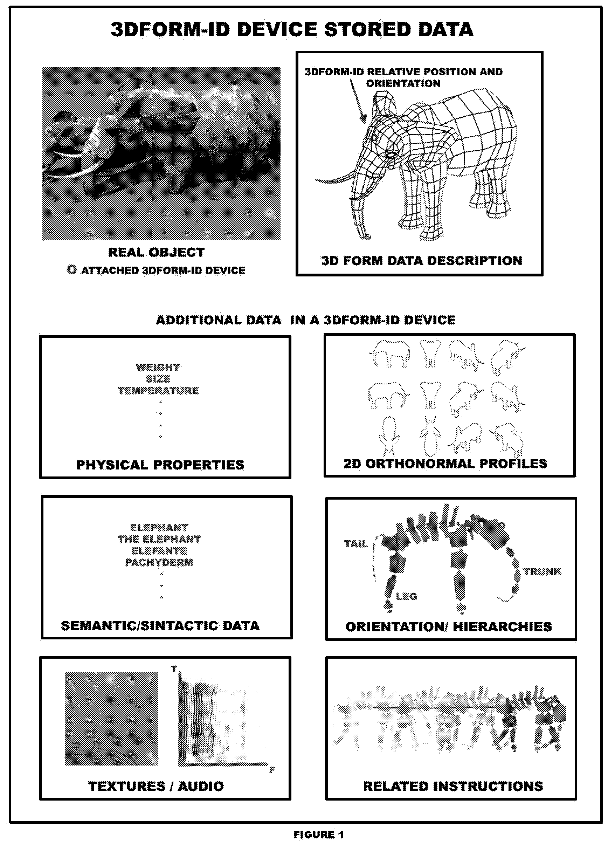

An illustrative figure of the main components of an identification device containing the tridimensional form of a real world's object is provided as **"****figure 1****".**

The most basic 3DFORM-ID device consist in any physical support that contains the artificially codified description of the form of the real object where the 3DFORM-ID device is attached, embedded or implemented. This 3D data can be read and detected by a computer based system located inside or outside of the identified object, and if the computer based system is equiped with the accurate tools for doing it. Also the 3DFORM-ID device contains his own position and orientation rereferenced to the description of the real object where the device is attached, and if it would be required, it would contains also the 3DFORM-ID device's own tridimensional form and size.

If the 3DFORM-ID device is sufficiently big for the detection method used, it can contains several detectable reference points inside, giving to the detection system the necesary information to infere by simple triangulation, or using any other calculation method, the accurate orientation and spatial position of the 3DFORM-ID device relative to the detection system.

If the tridimensional description of the concerning real object contained in a 3DFORM-ID device is done using digital data, the 3D data stored in a 3DFORM-ID device can be defined in many ways, as using a collection of points defined by their (x, y, z) coordinates, or using vertex, polygons, splines, lines, patches, voxels, NURBS surfaces or any other digital 3D representation method. The description of the object can be also non-digital, as by example using physically engraved or laser etched 3D space points, surfaces or volumes in any other tridimensional support that can be used as a memory device, like crystal blocks, artificial molecular arrangements, scaled sculptures or similar.

The object's description stored in the 3DFORM-ID device defines the tridimensional form of the attached object in their real world dimensions, in real units choosen in any measurement system. If the stored dimension units are in a different scale to 1:1 of the real world's attached object, a conversion factor must be stored and provided in the 3DFORM-ID device or in the computer based system that detects and reads the 3DFORM-ID device. The size of the object can also be referenced to other known object size or to the own 3DFORM-ID device size.

The 3D data can be stored and extrated in different resolutions or levels of detail, accordingly to the requested needs of the user of the computer based system.

This 3D data can be stored in any available support for making the 3DFORM-ID device: in an electromagnetical or optical support, as a chip RAM, ROM, EEPROM, chip card, magnetic band, printed code bar, CD, DVD, laser etched crystal or any other available memory storage support.

Each type of real object requires the most accurate support for making his 3DFORM-ID device. By example, a 3DFORM-ID device for identifyng a glass of water, a chair or a fork, can be done using a little EPROM, but a 3DFORM-ID for identifyng a car, a building or a city can requires a hard drive disk with high capacity to store only the huge amount of data necessary for describing the detailed tridimensional form of those complex objects.

The form, size, material used and weight of an encapsulated version of the 3DFORM-ID device can be very diverse, as it can be designed accordingly to the characteristics and requeriments of the real world's identified object and the hardware and software options to be included in the 3DFORM-ID device.

As this 3D data can be also etched or drawn over the object's surface, or embedded artificially in the identified object's structure or content, then this identified object with the artificially stored object's description data will be also considered as a 3DFORM-ID DEVICE, as the physical support for making the identification device is in this case the own identified object. But in this case must be also defined and codified a reference system for the object, with some detectable points on it, or it would not be possible to position or orientate accuratelly the loaded object description in a virtual scene.

To clarify the question, a floppy disk containing a file with only the tridimensional description of the own floppy disk, wouldn't be a 3DFORM-ID device.

Also is needed to be defined previously some detectable points in the real object, to be detected by a 3DFORM-ID capable system, then serving these detected real objects' points as the referenced position and orientation of the real object relative to his tridimensional description, and then allowing to the detection system to infere the exact position and orientation of the real floppy disk. The default coordinates center of the reference system provided in the floppy disk's file will not be valid, as the system can't inferes only from this data the accurate orientation and position of the real floppy disk. Two floppy disks of the real world containing the same file with only the tridimensional description of the floppy disk, both will be erroneously positioned in the same spatial wrong position in the virtual scene, and also surely with a wrong orientation.

The basic data provided with a 3DFORM-ID device is the tridimensional form of the attached real world's object. But much more data can be included in a 3DFORM-ID device concerning the identified real world object, not only to allow a more precise identification of the attached real world object, but more important, to allow to a system to predict and simulate the potencial actions of the identified objects in a given environment.

### 3.1- A: PHYSICAL PROPERTIES OF THE ATTACHED REAL WORLD'S OBJECT

Inside a basic 3DFORM-ID device can be stored also any physical properties of the real object, as the weight, volume, main dimensions, material and chemical composition, maleability, conductibility, temperature, color, transparency, reflectivity, density, magnetism, age, maximum speed, ...and so. This information can be used by a computer based system for doing dynamic simulations in a tridimensional virtual scene in the system's memory.

### 3.1-B: 2D ORTHONORMAL PROFILE VIEWS OF THE ATTACHED REAL WORLD'S OBJECT

Inside a basic 3DFORM-ID device can be stored a set of images with ortonormal profiles of the object, to be used by a computer based system to compare the identified object with other real world objects that maybe doesn't contains a 3DFORM-ID device, or compared with other objects in a digital library of 3D models. Also these profiles can allow to the system to identify 2D drawings or images obtained by any input device conected to the system.

### 3.1-C: SEMANTIC /SINTACTIC DATA CONCERNING THE ATTACHED REAL WORLD'S OBJECT

Inside a basic 3DFORM-ID device can be stored some common names describing the attached object in various languages, and also their synonimes and some basic sintactic rules concerning the use of main adverbs and articles related to these names. With this information, a computer based system can construct tridimensional virtual scenes in a memory using only the input words or, in a reverse way, can output words or sentences after reading them as an inherent property of the virtual objects located in a virtual tridimensional scene.

### 3.1-D: HIERARCHIES AND SUB-OBJECT DATA CONCERNING THE ATTACHED REAL WORLD'S OBJECT

Inside a basic 3DFORM-ID device can be stored other possible information concerning sub-object pieces, articulated parts or hierarchical links between these sub-objects, and also their link or dependence to a greater super-structures where the concerning attached object can be included. This device can contain information about object's handles, tags or any necessary reference to allow to a computer based system to manipulate accuratelly the loaded tridimensional representations of the identified objects.

### 3.1-E: TEXTURE MAPS AND AUDIO DATA CONCERNING THE ATTACHED REAL WORLD'S OBJECT

Inside a basic 3DFORM-ID device can be stored data concerning surface texture maps for describing some pattern based issues of the identified object as the aspect, the surface rugosity, termical maps or audio data that can help to a computer based system to identify more accurately the object and, as a result, making more exact predictions about the system's real world environment.

### 3.1-F: HANDLING AND PERFORMANCE INSTRUCTIONS CONCERNING THE ATTACHED REAL WORLD'S OBJECT

Inside a basic 3DFORM-ID device can be stored data concerning some instructions for humans or for computer based systems to allow them to manipulate accuratelly both the real object located in the system's real environment, and the tridimensional simulation of the same object in the virtual space of the system. This type of data can includes identification movements of the object, as those done by an animal, or the object's allowed freedom degrees of movement, or the rotation axis of the object.

Also this type of instruction data can be very diverse, as can concern habits, growing rules, reproduction rules, feeding rules, energy requirements, or recycling and storage instructions, as a brief example.

### 3.1-G: THIRD PART RELATED INTELLECTUAL AND INDUSTRIAL PROPERTY DA TA CONCERNING THE ATTACHED REAL WORLD'S OBJECT

Finally, in a basic 3DFORM-ID device can be included additional data subject to third part intellectual or industrial property rights as trademarks, identification code bars, logos, serial number, price, designed color schemes, or other additional data in accordance to the specifications of the owner of the rights of the referred intelectual property.

It can be said, a 3DFORM-ID device is an invention that allows a complete description and identification of a real world's object. In some way, a 3DFORM-ID device is like the DNA of any existing object, animated or inanimated.

### 3.2.: 3DFORM-ID DEVICE MODULAR OPTIONS

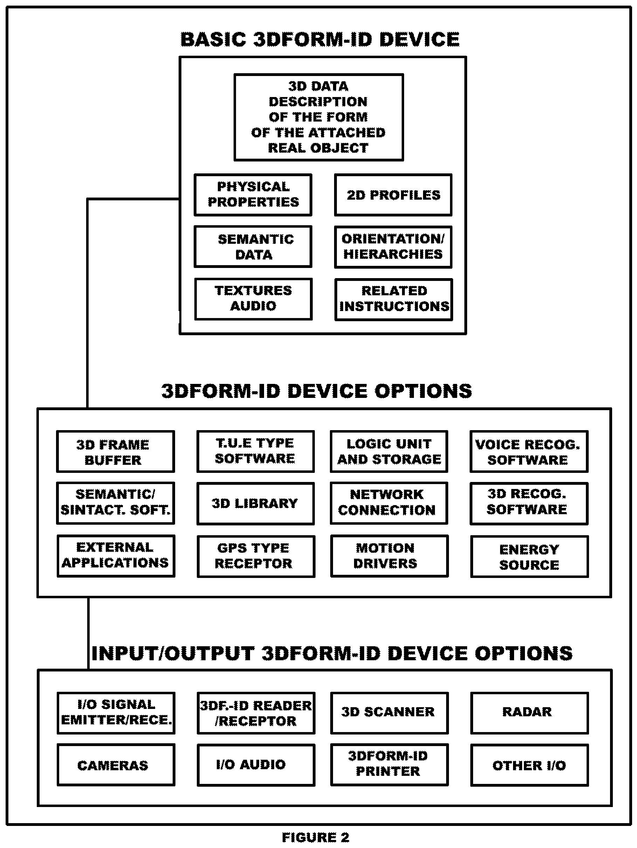

An schematic view of the description of some option modules or components to be added or included in a 3DFORM-ID device is provided as **"****figure 2****".**
A 3DFORM-ID device that contains also one or more of the following options is by itself a true 3DFORM-ID system, with more or less capability for operate in an independent way using a 3DFORM-ID related proceeding.

### 3.2-A: LOGIC UNIT AND ADDITIONAL STORAGE

If a 3DFORM ID device contains a processor and a memory sytem as modular options, then the 3DFORM-ID device can store software to analize his own data or the data coming from an external source. Also in this way the 3DFORM-ID device can store changing conditions on time, to track his own position in a period of time or to store new detected objects in his environment, by example.

### 3.2-B: TRIDIMENSIONAL FRAME BUFFER

A tridimensional frame buffer will alllows to a 3DFORM-ID device to render in images the tridimensional scene content of an optional memory system, then the images can be output to a screen for being seen by an user, or also can be compared with other images generated by other applications or introduced by an external input device.

### 3.2-C: VOICE RECOGNITION SOFTWARE

A sofware that allows the recognition of the words spoken by an user of the system.

### 3.2-D: TUE TYPE SOFTWARE

TUE means Tridimensional Understanding Engine, and this is a term used here to describe any type of software that allows to a computer based system to manipulate the tridimensional objects obtained from a 3DFORM-ID device and download them in the sytem's memory, to proceed after to making predictions and simulations with these loaded tridimensional objects and accordingly to the specific requeriments of a system's user. This type of software can read also tridimensional objects or tridimensional actions from a 3D library to compare the library objects with the real world's identified objects. Also a TUE must be capable to accept sentences and convert them in tridimensional scenes, or to output sentences describing tridimensional scenes contained in the system's memory.

### 3.2-E: SEMANTIC/SINTACTIC PROCESSING SOFTWARE

As a 3DFORM-ID device can contains also semantic or sintactic information concerning the description of the real world's object, then this software can help to a TUE like software to build tridimensional scenes in a 3DFORM-ID device containing a processor and memory options.

### 3.2-F: 3D LIBRARY

A 3D library is a resident collection of tridimensional objects containing the same type of objects descriptions (forms, physical properties) that are available in a 3DFORM-ID device. Using this library, a 3DFORM-ID device based system can identify more easily a detected real world's object that not contains attached a 3DFORM-ID device, or can help to a TUE software to construct tridimensional scenes using input sentences, identification noises or any other type of input data.

### 3.2-G: NETWORK CONNECTION

A 3DFORM-ID device based system with a network conection can receive and interchange information with other 3DFORM-ID devices also conected to the network, or with external systems for interchange or research any type of information required by a 3DFORM-ID device based system.

### 3.2-H: 3D RECOGNITION SOFTWARE

If the 3DFORM-ID device based system have also available some input device for detecting or scanning other real world's objects that doesn't have attached a 3DFORM-ID device, then he will need this software to built a tridimensional form with the 3D scanned data and after comparing it with other existing 3D objects contained in the 3D library, with the purpose of being identified.

### 3.2-1: EXTERNAL APPLICATIONS

A 3DFORM-ID device based system can contains any additional application software or operating system acordingly to the requeriments of the system.

### 3.2-J: GLOBAL POSITION RECEIVER

On despite a basic 3DFORM-ID device doesn't needs to know his own spatial position in the real world, sometimes it would be necessary to incorporate a global position receiver as GPS or Galileo or based in any other positional system externally referenced. This option can help to a 3DFORM-ID device based system to built the accurate tridimensional scenes in his memory, without using an internal proceeding for doing it, as the triangulation method for positioning the detected objects in the virtual memory of the system.

### 3.2-K: MOTION DRIVERS

A 3DFORM-ID device based system equiped with motion drivers can manipulate a vehicle or a robot in a real world environment.

### 3.2-L: ENERGY SOURCE

A basic 3DFORM-ID device is a device without an independent source of energy, then his utility is conditioned by the capabilities of an external system to detect and read the device.
An independent energy source module option can increase considerably the capabilities of a 3DFORM-ID device.

### 3.3. INPUT/OUTPUT 3DFORM-ID DEVICE OPTIONS

An schematic view of the description of some possible input /output option modules to be added or included in a 3DFORM-ID device is provided as "figure 2"

### 3.3-A: 3DFORM-ID READER AND EMITTER

A basic 3DFORM-ID device have not installed on it an emitter or a reader from or to other 3DFORM-ID devices or from or to other 3DFORM-ID based systems. This would be the option for doing it.

### 3.3-B: INPUT/OUTPUT SIGNAL EMITTER/RECEIVER

A basic 3DFORM-ID device have not installed a generic INPUT / OUTPUT SIGNAL EMITTER / RECEIVER from or to other signal or receiver source. This would be the option for doing it.

### 3.3-C: 3D SCANNER

A 3-D Scanner input device option will allow to a 3DFORM-ID system to scan and then to identify real world objects without an installed 3DFORM-ID device. The 3D scanner can be of any type of those available in the market, as a laser 3D scanner, proyected light 3D scanner, contact 3D scanner or other.

### 3.3-D: PROXIMITY RADAR

A proximity radar will allows to a 3DFORM-ID system to detect any unidentified real world's object in his inmediate environment.

### 3.3-E: CAMERAS

Optical cameras, termical cameras, infrared cameras or any other type of cameras can be connected to a 3DFORM_ID system, to allow him additional detection capabilities of unidentified objects or possible corrections to be done in the identified objects with an attached 3DFORM-ID device.

### 3.3-F: INPUT/OUTPUT AUDIO

A microphone and a speaker can be added to a 3DFORM-ID system, allowing the sytem to comunicate verbally with an user or also detecting an external object by recognizing his audio signal and comparing it with the audio stored in an object contained in a previously defined 3D library.

### 3.3-G: 3DFORM-ID PRINTER

A 3DFORM-ID printer can help to a 3DFORM-ID system to print to a magnetic band, to a chip memory or to any other electromagnetic or physical support the description content obtained from a previously non identified real world's object, and then to proceed to attach this new 3DFORM-ID device to the new real world's object, then it would be quickly identified by his tridimensional form and physical properties by a 3DFORM-ID based system.

### 3.3-H: OTHER INPUT/OUTPUT OPTIONS

Any additional input/output option can be add to a 3DFORM-ID system, to allow him additional capabilities of detection of unidentified objects and as a security cheking of the identified objects.

### 4. DESCRIPTION OF THE PATENT CLAIM 2: A GENERAL PROCEEDING FOR THE USE OF AN IDENTIFICATION DEVICE CONTAINING THE TRIDIMENSIONAL FORM OF A REAL WORLD'S OBJECT

In this description, the proceeding for the use of an identification device containing the tridimensional form of a real world's object will be referred as a "3DFORM-ID PROCEEDING", and the identification device will be referred as "3DFORM-ID DEVICE"

### 4.1 MAIN STEPS IN THE 3DFORM-ID PROCEEDING RELATED TO THE USE OF A 3DFORM-ID DEVICE.

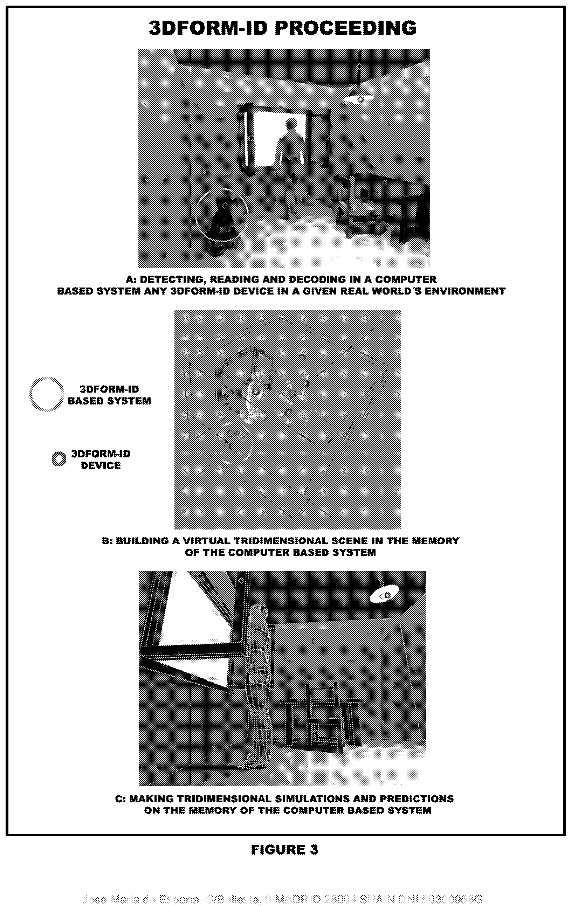

An illustrative figure of the main steps in the 3DFORM-ID proceeding related to the use of a 3DFORM-ID device is provided as **"****figure 3****".**

### 4.1-A: DETECTING, READING AND DECODING IN A COMPUTER BASED SYSTEM ANY 3DFORM-ID DEVICE IN A GIVEN REAL WORLD'S ENVIRONMENT

First of all is required a system capable of detecting, reading and decoding one or more 3DFORM-ID device types. The detection can be done in many ways as by contact, by proximity or by receiving an external signal, if the 3DFORM-ID contains on itself a signal generator and his own energy source. The energy source of the 3DFORM-ID device can be also electromagnetically induced by an external source, by example generated by the detecting system. For determining the distance and orientation of the 3DFORM-ID device, the system can do it in several ways, by example by simple triangulation between the detected 3DFORM-ID device and other object's parts identified optically or electromagnetically. If the 3DFORM-ID device is sufficiently big for the detection method, it can contains several detectable reference points inside, giving to the detection system the necessary information to infere by simple triangulation or other calculation method the accurate orientation and spatial position of the 3DFORM-ID device relative to the detection system. If the same object contains more sub-ojects with their owns 3DFORM-ID devices, or other more simple tridimensional position devices available currently on the market, the detection system can also determine the distance, relative position and orientation of all the detected 3DFORM-ID devices in a given environment. Once detected, the system will proceed to extract the content of the 3DFORM-ID device and decoding this extracted content with the appropiate software tool.

### 4.1-B: BUILDING A VIRTUAL TRIDIMENSIONAL SCENE IN THE MEMORY OF THE COMPUTER BASED SYSTEM.

For this step of the proceeding, the computer based system requires to have installed the accurate hardware and software tools to allow the creation and manipulation of tridimensional, virtual scenes in the system's memory. Once the 3DFORM-ID content is loaded in the system, the system will proceed to build a tridimensional scene with this content in his defined virtual space. The loaded tridimensional objects will be arranged in the appropiate positions and orientations to match the real world's positions and orientations of their real world's counterparts, and referenced spatially to the own 3DFORM-ID capable system, or to one of the other loaded tridimensional objects or to any specific reference system defined by the user or accordingly to the system requeriments.

### 4.1-C: MAKING TRIDIMENSIONAL SIMULATIONS AND PREDICTIONS IN THE MEMORY OF THE COMPUTER BASED SYSTEM.

The third step in the proceeding is making simulations and predictions in the memory of the computer based system. For achieving these requeriments, the system's installed software must be capable to read and manage all the necessary properties for an specific application of all the virtual 3D objects downloaded from the detected 3DFORM-ID devices, and proceed to ellaborate simulations, interactions or predictions between these loaded virtual objects and accordingly to the requeriments of the system or by an user of the system. These simulations can be very simple, as to render (see **figure 3-C**) in the frame buffer of the system an image more or less realistic of the composed virtual scene, or extremelly complex, as some dynamic simulations implying many objects interacting between them. The final output of the simulation done inside the system's memory also can be very diverse, as to output orders for controlling the movements of a robot device in the real world or to output a semantic description of the virtual scene, to be listed like a printed text or, using a speaker, to be told to an user of the system.

On definitive, the described proceeding is like a self-configured operating system, where each object is like a piece of a tridimensional puzzle that can be built by a system capable of putting all these tridimensional pieces together and after predicting all their interactions.

### 4.2 SOME DIRECT APPLICATIONS OF A GENERAL PROCEEDING FOR THE USE OF AN IDENTIFICATION DEVICE CONTAINING THE TRIDIMENSIONAL FORM DESCRIPTION OF A REAL WORLD'S OBJECT

Any application that requires to load in his system the tridimensional form and orientation of a real world's object, is a potential user of a 3DFORM-ID device and proceeding. As a result, the number of applications that can use the proceeding described here is very extense. On the next topics, some obvious applications are briefly described.

### 4.2-A: AN APPLICATION FOR TRAFFIC CONTROL AND A TOTALLY AUTOMATIC DRIVING

Any type of traffic system would be benefited on the massive use of 3DFORM-ID devices and the current 3DFORM-ID proceeding. An example is the traffic of vehicles on roads. Each vehicle must have a computer based system with the capability to detect 3DFORM-ID devices installed in other vehicles, or on trees, buildings, persons, animals, trafic signals and any object that can be usually found in a road. The vehicle must contain also his own 3DFORM-ID device, then the system will be capable to load accuratelly oriented and positioned, in his tridimensional virtual memory scene, all the surrounding objects around the own vehicle. It must be specified a ratio of detection, accordingly with the speed of the vehicle. In this simple way, it's possible to automatize all the driving process to a high degree.The user of the vehicle can have the option to see in a screen an exact virtual rendered reproduction of the surrounding scene. Such system doesn't needs to use a global position device as GPS or Galileo, but it would be useful their use for re-inforcing the security of the application. The vehicle must contain also a short range radar to detect possible big unidentified objects without an attached 3DFORM-ID device or with a damaged unit. A proximity radar can announce any possible appearance of unidentified objects, forcing the accurate reaction of the vehicle, and giving to the application a security level similar or superior to those required in the train service system. Similar applications based in the massive use of 3DFORM-ID devices can be developed for maritime or air traffic control.

### 4.2-B: AN APPLICATION FOR STORAGE AND MANAGEMENT OF REAL WORLD'S OBJECTS.

Another huge area of application of the 3DFORM-ID based proceeding and devices is their use in the storage or management of any type of real world's object. By example, for doing an accurate management of products in a supermarket, as the supermarket 3DFORM-ID device based computer system will have the necessary information of the tridimensional form, position and orientation of all the products that would contains a 3DFORM-ID device and the system could simulate in his virtual memory how these objects must be located in the stands or how they must be packaged for a specific user. The stands, the refigerators or the own supermarket building can contain also their own 3DFORM-ID device. An user also will be capable to do a trully interactive 3D virtual visit to a supermarket for doing the purchase, using his own domestic version of a computer system based in the remote use of 3DFORM-ID devices and proceedings . The user can't be limited to pickup a generic object in a visual catalogue, but to pickup the real thing, the concrete issue stored in a specific position at the supermarket. The user could be capable to render in his 3DFORM-ID based system terminal an absolutely fidedign view of his own virtual position at the supermarket, without the need to install a single real camera in the supermarket. Also the packaging of many different products in a single shipment can be automatized and optimized in a high degree: As the supermarket's 3DFORM-ID based system will have the necessary information of the tridimensional form, size, weight, conservation temperature or deformability of each product included in the order done by an specific user, then it can simulates in a tridimensional virtual space the best method to accomodate all the products in a shipping box, previously to accomodate all these objects inside the real world's shipping box in a fully automatic way.

### 4.2-C: AN APPLICATION FOR SECURITY CONTROL

Military, civil or policial security systems can be benefited and simplified enormously by the massive implantation of 3DFORM-ID devices. An hipothetical world with all the people identified with 3DFORM-ID devices and tracked permanently, can makes virtually impossible that many types of crimes will be done. And if the crime finally occurs, it would be possible to reconstruct to the minimal detail all the crime, with their actors, surrounding witnesses, exact positions or actions fully rendered and reconstructed again in a virtual memory, and the actions can be observed and analized from any point of view choosen by the user of the system. Current prisions can turns also less useful with a full implantation of 3DFORM-ID devices, as liberty privation can be sustituted for progressive intimity privation according to the magnitude of the crime. In the domestic security area, the applications also can be infinite. If an user wants to follow his childrens in the school, their 3DFORM-ID devices will tell him exactly where the childs are in that moment, how they are seated, what they are doing, how are their chairs, or if they have forgotten a coat on the gym, because the 3DFORM-ID devices of the gym and the coat can be detected by the 3DFORM-ID based system of the school's building and then transmitted and rendered in the virtual memory of the user home's 3DFORM-ID based system, working with the described 3DFORM-ID proceeding.

### 4.2-D: AN APPLICATION FOR OMNIPRESENT VIRTUAL CAMERAS

In an hipotetical world where all the objects on it would have a 3DFORM-ID device installed on them, it would be possible to reconstruct, in the virtual memory of a computer based system that works with a 3DFORM-ID based proceeding, any concrete place of the world. For that, the user simply must specify the exact spatial coordinates of the place where the user wants to put his virtual camera, and specify also a ratio of reconstruction. Then the 3DFORM-ID capable system would proceed to search on the network the 3DFORM-ID system with network connection that would be more near to the selected coordinates, then ordering to the remote system to detect and load all the 3DFORM-IDs of the objects contained in a surrounding ratio required by the user, and sending all this data to the user's system. There, using all the data provided by the distant 3DFORM-ID devices, the local system would proceed to render an exact virtual view of the selected place, where the user will be capable to turn around the virtual camera, to zoom in or out to the details, or advance freely his virtual camera in any direction, and obtaining the user any available information or interaction from any object that the user would pick from the tridimensional scene. An stereoscopical virtual camera can also be defined, and as the local meteorological data or the local sunlight position hour can be properly reported by one of the objects downloaded, then the rendered vision of the user can be subjetively very similar to the real view that a local person could be seeing in the real place in the same moment. This application would be a powerful sustitute of the current real control cameras or web cameras, as the control of the virtual camera by the user can be much more efficient for many things.

### 4.2-E: AN APPLICATION FOR DOMESTIC, MILITARY OR INDUSTRIAL ROBOTS

A robot based in a 3DFORM-ID proceeding would be capable to interact with their surrounding environment quickly and safely. For that, the robot must contain itself a 3DFORM-ID device to allow to their own system to load himself and all the surrounding objects in his system's virtual scene with the accurate relative positions and orientations, then the robot can proceed to simulate in his memory any action to be done by himself, before executing any action in the real world. As a 3DFORM-ID identified environment can allow to the robot to download from his environment not only the tridimensional form of the surrounding objects, but all the objects' capabilities and physical properties, then the robot can proceed to predict quickly and with a high degree of accuracy not only the actions he can performs in the real world but also how would be the response of the surrounding environment to his own robotic actions. As the 3DFORM-ID device contains also semantic info and basic sintactic rules concerning the identified object, then the robot can receives direct verbal instructions by an user, concerning the objects located in a given moment in his environment, and then the robot would proceed to decode these received verbal instructions in their corresponding tridimensional objects, and then proceeding to built a tridimensional scene to understand the user requeriments, and simulating, previously to making it, the accurate action in his virtual memory and finally proceeding to act in the real environment as a perfect slave under his user's orders.

## Claims

1. A device attached to a real object comprising:
- a plurality of detectable reference points representative of a position and an orientation of the device in a three-dimensional space;
- a memory for storing data comprising:
∘ a three-dimensional description of said object that defines a three-dimensional form of said object in real-world dimensions;
∘ a position and orientation of the device relative to said three-dimensional description of said object; and
- means for emitting said data.

2. The device of claim 1 wherein said three-dimensional description is encoded according to at least one format of a group of formats comprising: polygons, splines and voxels.

3. The device of claim 1 or 2 wherein said data are available in at least two resolutions or levels of detail.

4. The device of one of the claims 1 to 3 wherein said data further comprises at least one information of a group of information comprising physical properties of said object, orthonormal profile view of said object, semantic data related to said object, texture images associated with said three-dimension description and movement properties of said object.

5. The device of one of the claims 1 to 4 further comprising a processor configured to process said data according to time or said position of said device.

6. The device of one of the claims 1 to 5 wherein said means for emitting comprise an energy source and a signal emitter configured to transmit said data.

7. A method comprising:
- detecting a plurality of detectable reference points of at least one device in the real world, said plurality of points being representative of a position and an orientation of said device in a three-dimensional space, said device being attached to a real object; and
- obtaining, from said device, data comprising a three-dimensional description of said real object that defines a three-dimensional form of said real object in real-world dimensions and a position and orientation of said device relative to said three-dimensional description of said real object; and
- building a three-dimensional virtual scene from at least said three-dimensional description and using said plurality of points and said position and orientation of said device relative to said three-dimensional description, said virtual scene comprising a virtual three-dimensional object having said three-dimensional description and being arranged within the virtual scene in a position and orientation, which matches a position and orientation of said real object in the real world.

8. The method of claim 7 wherein said data further comprises at least one information of a group of information comprising physical properties of said object, orthonormal profile view of said object, semantic data related to said object, texture images associated with said three-dimension description and movement properties of said object and said method of claim 9 further comprises computing simulations on said three-dimensional description according to said at least one information.

9. A system comprising:
- means for detecting a plurality of detectable reference points of a device, said plurality of points being representative of a position and an orientation of said device in a three-dimensional space, said device being attached to a real object;
- means for obtaining, from said device, data comprising a three-dimensional description of the object that defines a three-dimensional form of said object in real-world dimensions and a position and orientation of said device relative to said three-dimensional description of said real object;
- a processor configured to build a three-dimensional virtual scene using said three-dimension description, said plurality of detectable reference points and said position and orientation of said device relative to said three-dimensional description of said real object, said virtual scene comprising a virtual three-dimensional object built from said three-dimensional description and being arranged within the virtual scene in a position and orientation, which matches a position and orientation of said real object in the real world and
- a memory configured to store said data.

10. The system of claim 9 wherein said data further comprises at least one information of a group of information comprising physical properties of said object, orthonormal profile view of said object, semantic data related to said object, texture images associated with said three-dimension description and movement properties of said object and wherein said at least one processor is further configured to compute simulations on said three-dimension description.

## Patentansprüche

1. Vorrichtung, welche mit einem realen Gegenstand verbunden ist, welche umfasst:
- mehrere erfassbare Referenzpunkte, welche für eine Position und eine Orientierung der Vorrichtung in einem dreidimensionalen Raum repräsentativ sind;
- einen Speicher zum Speichern von Daten, welcher umfasst:
∘ eine dreidimensionale Beschreibung des Gegenstandes, die eine dreidimensionale Form des Gegenstandes in Abmessungen der realen Welt definiert;
∘ eine Position und eine Orientierung des Gegenstandes im Verhältnis zu der dreidimensionalen Beschreibung des Gegenstandes; und
- Mittel zum Abgeben der Daten.

2. Vorrichtung nach Anspruch 1, wobei die dreidimensionale Beschreibung gemäß mindestens einem Format einer Gruppe von Formaten verschlüsselt ist, welche umfassen: Polygone, Splines und Voxel.

3. Vorrichtung nach Anspruch 1 oder 2, wobei die Daten in mindestens zwei Auflösungen oder Detailgenauigkeiten verfügbar sind.

4. Vorrichtung nach einem der Ansprüche 1 bis 3, wobei die Daten ferner mindestens eine Information einer Gruppe von Informationen umfassen, welche physikalische Eigenschaften des Gegenstandes, orthonormale Profilansichten des Gegenstandes, semantische Daten, welche auf diesen Gegenstand bezogen sind, Texturbilder, welche der dreidimensionalen Beschreibung zugeordnet sind und Bewegungseigenschaften des Gegenstandes umfassen.

5. Vorrichtung nach einem der Ansprüche 1 bis 4, ferner umfassend einen Prozessor, der konfiguriert ist, um die Daten gemäß der Zeit oder der Position der Vorrichtung zu verarbeiten.

6. Vorrichtung nach einem der Ansprüche 1 bis 5, wobei die Mittel zum Abgeben eine Energiequelle und einen Signalabgeber umfassen, der zum Übermitteln der Daten konfiguriert ist.

7. Verfahren, welches umfasst:
- Erfassen von mehreren erfassbaren Referenzpunkten von mindestens einer Vorrichtung in der realen Welt, wobei die mehreren Punkte für eine Position und eine Orientierung der Vorrichtung in einem dreidimensionalen Raum repräsentativ sind, wobei die Vorrichtung mit einem realen Gegenstand verbunden ist; und
- Erhalten von Daten von der Vorrichtung, welche eine dreidimensionale Beschreibung des realen Gegenstandes umfassen, die eine dreidimensionale Form des realen Gegenstandes in Dimensionen der realen Welt und eine Position und eine Orientierung der Vorrichtung im Verhältnis zu der dreidimensionalen Beschreibung des realen Gegenstandes definiert; und
- Erschaffen einer dreidimensionalen virtuellen Szene aus mindestens der dreidimensionalen Beschreibung und Verwenden der mehreren Punkte und der Position und der Orientierung der Vorrichtung im Verhältnis zu der dreidimensionalen Beschreibung, wobei die virtuelle Szene einen virtuellen dreidimensionalen Gegenstand umfasst, der die dreidimensionale Beschreibung aufweist und innerhalb der virtuellen Szene in einer Position und einer Orientierung angeordnet ist, welche mit einer Position und einer Orientierung des realen Gegenstandes in der realen Welt übereinstimmt.

8. Verfahren nach Anspruch 7, wobei die Daten ferner mindestens eine Information einer Gruppe von Informationen umfassen, welche physikalische Eigenschaften des Gegenstandes, orthonormale Profilansichten des Gegenstandes, semantische Daten, welche auf diesen Gegenstand bezogen sind, Texturbilder, welche der dreidimensionalen Beschreibung zugeordnet sind und Bewegungseigenschaften des Gegenstandes umfassen und das Verfahren nach Anspruch 9 ferner das Berechnen von Simulationen auf Grundlage der dreidimensionalen Beschreibung gemäß der mindestens einen Information umfasst.

9. System, welches umfasst:
- Mittel zum Erfassen mehrerer erfassbarer Referenzpunkte eines Gegenstandes, wobei die mehreren Punkte für eine Position und eine Orientierung der Vorrichtung in einem dreidimensionalen Raum repräsentativ sind, wobei die Vorrichtung mit einem realen Gegenstand verbunden ist;
- Mittel zum Erhalten von Daten von der Vorrichtung, welche eine dreidimensionale Beschreibung des Gegenstandes umfassen, die eine dreidimensionale Form des Gegenstandes in Dimensionen der realen Welt und eine Position und eine Orientierung der Vorrichtung im Verhältnis zu der dreidimensionalen Beschreibung des realen Gegenstandes definiert;
- Prozessor, der zum Erschaffen einer dreidimensionalen virtuellen Szene unter Verwendung der dreidimensionalen Beschreibung, der mehreren erfassbaren Referenzpunkte und der Position und der Orientierung der Vorrichtung im Verhältnis zu der dreidimensionalen Beschreibung des realen Gegenstandes konfiguriert ist, wobei die virtuelle Szene einen virtuellen dreidimensionalen Gegenstand umfasst, der aus der dreidimensionale Beschreibung erschaffen wurde und innerhalb der virtuellen Szene in einer Position und einer Orientierung angeordnet ist, welche mit einer Position und einer Orientierung des realen Gegenstandes in der realen Welt übereinstimmt.
- Speicher, der zum Speichern der Daten konfiguriert ist.

10. System nach Anspruch 9, wobei die Daten ferner mindestens eine Information einer Gruppe von Informationen umfassen, welche physikalische Eigenschaften des Gegenstandes, orthonormale Profilansichten des Gegenstandes, semantische Daten, welche auf diesen Gegenstand bezogen sind, Texturbilder, welche der dreidimensionalen Beschreibung zugeordnet sind und Bewegungseigenschaften des Gegenstandes umfassen und wobei der mindestens eine Prozessor ferner konfiguriert ist, um Simulationen auf Grundlage der dreidimensionalen Beschreibung zu berechnen.

## Revendications

1. Dispositif attaché à un objet réel comprenant :
- une pluralité de points de référence détectables représentatifs d'une position et d'une orientation du dispositif dans un espace tridimensionnel ;
- une mémoire pour stocker des données comprenant :
∘ une description tridimensionnelle dudit objet qui définit une forme tridimensionnelle dudit objet en dimensions dans le monde réel ;
∘ une position et une orientation du dispositif par rapport à ladite description tridimensionnelle dudit objet ; et
- des moyens d'émission desdites données.

2. Dispositif selon la revendication 1, dans lequel ladite description tridimensionnelle est encodée en fonction d'au moins un format d'un groupe de formats comprenant : des polygones, des splines et des voxels.

3. Dispositif selon la revendication 1 ou 2, dans lequel lesdites données sont disponibles dans au moins deux résolutions ou niveaux de détail.

4. Dispositif selon l'une des revendications 1 à 3, dans lequel lesdites données comprennent en outre au moins une information d'un groupe d'informations comprenant des propriétés physiques dudit objet, une vue de profil orthonormé dudit objet, des données sémantiques liées audit objet, des images de texture associées à ladite description tridimensionnelle et des propriétés de déplacement dudit objet.

5. Dispositif selon l'une des revendications 1 à 4, comprenant en outre un processeur configuré pour traiter lesdites données en fonction du temps ou de ladite position dudit dispositif.

6. Dispositif selon l'une des revendications 1 à 5, dans lequel lesdits moyens d'émission comprennent une source d'énergie et un émetteur de signal configuré pour transmettre lesdites données.

7. Procédé comprenant :
- la détection d'une pluralité de points de référence détectables d'au moins un dispositif dans le monde réel, ladite pluralité de points étant représentatifs d'une position et d'une orientation dudit dispositif dans un espace tridimensionnel, ledit dispositif étant attaché à un objet réel ; et
- l'obtention, en provenance dudit dispositif, de données comprenant une description tridimensionnelle dudit objet réel qui définit une forme tridimensionnelle dudit objet réel en dimensions dans le monde réel et une position et une orientation dudit dispositif par rapport à ladite description tridimensionnelle dudit objet réel; et
- la construction d'une scène virtuelle tridimensionnelle à partir d'au moins ladite description tridimensionnelle et à l'aide de ladite pluralité de points et desdites position et orientation dudit dispositif par rapport à ladite description tridimensionnelle, ladite scène virtuelle comprenant un objet tridimensionnel virtuel ayant ladite description tridimensionnelle et étant agencé au sein de la scène virtuelle dans une position et une orientation, qui concordent avec une position et une orientation dudit objet réel dans le monde réel.

8. Procédé selon la revendication 7, dans lequel lesdites données comprennent en outre au moins une information d'un groupe d'informations comprenant des propriétés physiques dudit objet, une vue de profil orthonormé dudit objet, des données sémantiques liées audit objet, des images de texture associées à ladite description tridimensionnelle et des propriétés de déplacement dudit objet et ledit procédé selon la revendication 9 comprend en outre le calcul de simulations sur ladite description tridimensionnelle en fonction de ladite au moins une information.

9. Système comprenant :
- des moyens de détection d'une pluralité de points de référence détectables d'un dispositif, ladite pluralité de points étant représentatifs d'une position et d'une orientation dudit dispositif dans un espace tridimensionnel, ledit dispositif étant attaché à un objet réel ;
- des moyens d'obtention, en provenance dudit dispositif, de données comprenant une description tridimensionnelle de l'objet qui définit une forme tridimensionnelle dudit objet en dimensions dans le monde réel et une position et une orientation dudit dispositif par rapport à ladite description tridimensionnelle dudit objet réel ;
- un processeur configuré pour construire une scène virtuelle tridimensionnelle à l'aide de ladite description tridimensionnelle, de ladite pluralité de points de référence détectables et desdites position et orientation dudit dispositif par rapport à ladite description tridimensionnelle dudit objet réel, ladite scène virtuelle comprenant un objet tridimensionnel virtuel construit à partir de ladite description tridimensionnelle et étant agencé au sein de la scène virtuelle dans une position et une orientation, qui concordent avec une position et une orientation dudit objet réel dans le monde réel et
- une mémoire configurée pour stocker lesdites données.

10. Système selon la revendication 9, dans lequel lesdites données comprennent en outre au moins une information d'un groupe d'informations comprenant des propriétés physiques dudit objet, une vue de profil orthonormé dudit objet, des données sémantiques liées audit objet, des images de texture associées à ladite description tridimensionnelle et des propriétés de déplacement dudit objet et dans lequel ledit au moins un processeur est en outre configuré pour calculer des simulations sur ladite description tridimensionnelle.
